# EUROPEAN PATENT APPLICATION

(11) **EP 3 632 960 A1**
(43) Date of publication of application: **08.04.2020**
(21) Application number: 18810325.3
(22) Date of filing: 16.05.2018
(51) Int. Cl.: C08G 77/50, C08G 77/06, C08G 77/44

(54) **SILICON COMPOUND AND METHOD FOR PRODUCING SAME**

(30) Priority: 31.05.2017 JP 2017108038
(71) Applicant: Hitachi Chemical Company, Ltd., Chiyoda-ku Tokyo 100-6606 (JP)
(72) Inventor: TANAKA Tooru, Tokyo 100-6606 (JP); KAWAMORI Takashi, Tokyo 100-6606 (JP); UNNO Masafumi, Maebashi-shi Gunma 371-8510 (JP)
(74) Representative: Hoffmann Eitle
(86) International application number: PCT/JP2018/018906
(87) International publication number: WO 2018/221221

(57) **Abstract**

A silicon compound having a structural unit represented by general formula (I) shown below. In general formula (I), m represents an integer of 1 to 30, n represents a number that ensures a weight average molecular weight of 5,000 to 1,000,000, each of R¹ to R⁴ independently represents an alkyl group of 1 to 8 carbon atoms or an aryl group of 6 to 14 carbon atoms, each of R⁵ and R⁶ independently represents an alkyl group of 1 to 8 carbon atoms or an aryl group of 6 to 14 carbon atoms, each of R⁷ to R¹⁰ independently represents an alkyl group of 1 to 8 carbon atoms or an aryl group of 6 to 14 carbon atoms, and in the n structural units, the combinations of m and R¹ to R¹⁰ may be all the same, partially different, or all mutually different.

## Description

### TECHNICAL FIELD

Embodiments of the present invention relate to a silicon compound and a method for producing that compound.

### BACKGROUND ART

Silsesquioxanes represented by (RSiO_{1.5})ₙ are known as compounds that can be obtained by subjecting an organosilicon compound having three hydrolyzable groups to hydrolysis followed by condensation. These compounds have a chemical structure that can be said to exist between silicone resins and glass, and because they have excellent properties including heat resistance, transparency and weather resistance, they are attracting much attention as optical, semiconductor and electronic materials, with a large amount of research continuing to be reported.

Known structures for these silsesquioxanes include random structures with no specific structure, as well as double-decker structures, ladder structures and cage structures for which the structure can be determined. Although all of these structures have excellent properties, from the viewpoint of the correlation between precise material design and the manifestation of properties, ladder structures and cage structures for which the structure can be determined are particularly superior.

However, these silsesquioxanes exhibit powerful cohesive properties, and if mixed with existing resins to improve those resins, are prone to phase separation, meaning the expected properties can sometimes not be obtained. Accordingly, techniques have been developed for introducing a silsesquioxane into the main chain of a polymer to suppress cohesion. For example, Patent Document 1 proposes an example in which a double-decker silsesquioxane is introduced into the main chain, whereas Non-Patent Document 1 proposes an example in which a cage silsesquioxane is introduced into the main chain. Either of these silsesquioxanes has a three-dimensional polyhedral structure, and uses either 10 or 8 silicon atoms.

### PRIOR ART DOCUMENTS

### PATENT DOCUMENT

Patent Document 1: JP 2008-280420 A

### NON-PATENT DOCUMENT

Patent Document 1: Polymer Chemistry, (2015), 6, 7500 to 7504.

### SUMMARY OF THE INVENTION

### PROBLEMS TO BE SOLVED BY THE INVENTION

One embodiment of the present invention has an object of providing a polymer having a main chain into which has been introduced a ladder silsesquioxane of low cost and excellent heat resistance that has 6 silicon atoms, which is fewer than conventional silsesquioxanes having a polyhedral structure.

### MEANS TO SOLVE THE PROBLEMS

Specific aspects for achieving the above object are as follows.
[1] A silicon compound having a structural unit represented by general formula (I) shown below. 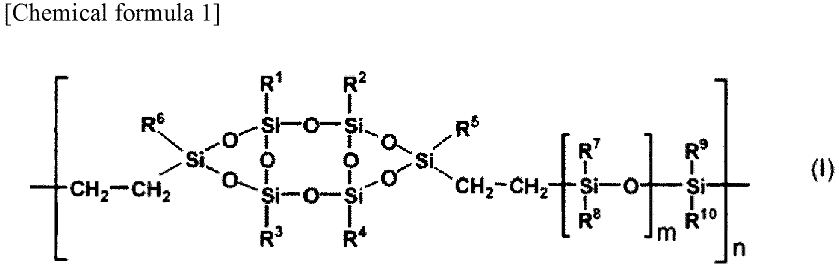 [In general formula (I), m represents an integer of 1 to 30, n represents a number that ensures a weight average molecular weight of 5,000 to 1,000,000, each of R¹ to R⁴ independently represents an alkyl group of 1 to 8 carbon atoms or an aryl group of 6 to 14 carbon atoms, each of R⁵ and R⁶ independently represents an alkyl group of 1 to 8 carbon atoms or an aryl group of 6 to 14 carbon atoms, each of R⁷ to R¹⁰ independently represents an alkyl group of 1 to 8 carbon atoms or an aryl group of 6 to 14 carbon atoms, and in the n structural units, the combinations of m and R¹ to R¹⁰ may be all the same, partially different, or all mutually different.]
[2] A method for producing a silicon compound having a structural unit represented by general formula (I) shown below, the method including a step of producing the silicon compound using a compound represented by general formula (II) shown below. 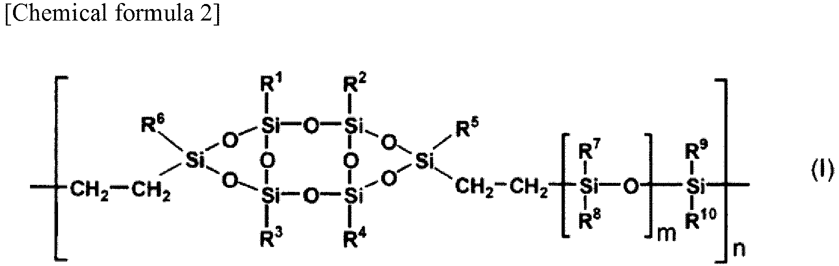 [In general formula (I), m represents an integer of 1 to 30, n represents a number that ensures a weight average molecular weight of 5,000 to 1,000,000, each of R¹ to R⁴ independently represents an alkyl group of 1 to 8 carbon atoms or an aryl group of 6 to 14 carbon atoms, each of R⁵ and R⁶ independently represents an alkyl group of 1 to 8 carbon atoms or an aryl group of 6 to 14 carbon atoms, each of R⁷ to R¹⁰ independently represents an alkyl group of 1 to 8 carbon atoms or an aryl group of 6 to 14 carbon atoms, and in the n structural units, the combinations of m and R¹ to R¹⁰ may be all the same, partially different, or all mutually different.] 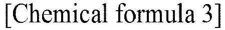 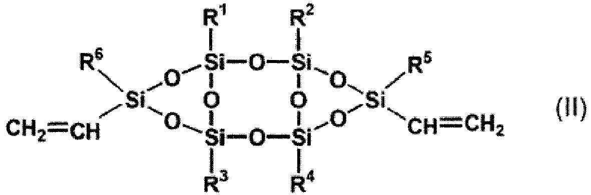 [In general formula (II), each of R¹ to R⁴ independently represents an alkyl group of 1 to 8 carbon atoms or an aryl group of 6 to 14 carbon atoms, and each of R⁵ and R⁶ independently represents an alkyl group of 1 to 8 carbon atoms or an aryl group of 6 to 14 carbon atoms.]
[3] The method for producing a silicon compound according to [2], the method including a step of producing the silicon compound using a compound represented by general formula (III) shown below. 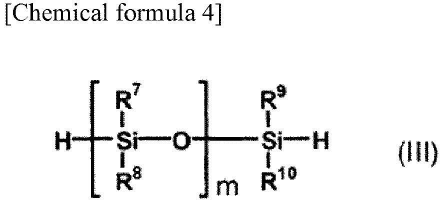 [In general formula (III), m represents an integer of 1 to 30, and each of R⁷ to R¹⁰ independently represents an alkyl group of 1 to 8 carbon atoms or an aryl group of 6 to 14 carbon atoms.]

### EFFECTS OF THE INVENTION

An embodiment of the present invention are able to provide a polymer having a main chain into which has been introduced a ladder silsesquioxane of low cost and excellent heat resistance.

### BRIEF DESCRIPTION OF THE DRAWINGS

FIG. 1 is the ¹H NMR spectrum for the three geometrical isomers of a compound represented by general formula (Z).
FIG. 2 is the ¹³C NMR spectrum for the three geometrical isomers of a compound represented by general formula (Z).
FIG. 3 is an expanded view of the ¹³C NMR spectrum for the three geometrical isomers of a compound represented by general formula (Z).
FIG. 4 is the ²⁹Si NMR spectrum for the three geometrical isomers of a compound represented by general formula (Z).

### EMBODIMENTS FOR CARRYING OUT THE INVENTION

Embodiments of the present invention are described below, but the present invention is in no way limited by the following examples.

### [Silicon Compound]

The silicon compound according to one embodiment is characterized by having a structural unit represented by general formula (I) shown below.

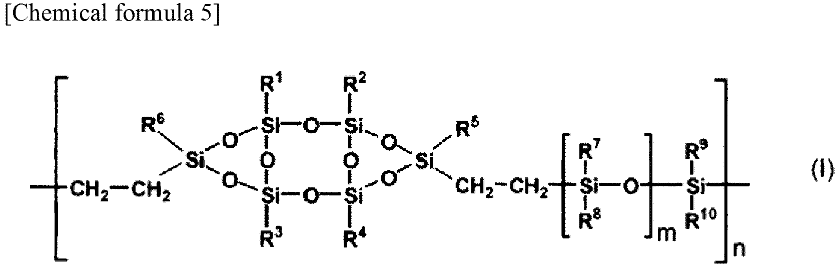

In general formula (I), m represents an integer of 1 to 30, n represents a number that ensures a weight average molecular weight of 5,000 to 1,000,000, each of R¹ to R⁴ independently represents an alkyl group of 1 to 8 carbon atoms or an aryl group of 6 to 14 carbon atoms, each of R⁵ and R⁶ independently represents an alkyl group of 1 to 8 carbon atoms or an aryl group of 6 to 14 carbon atoms, each of R⁷ to R¹⁰ independently represents an alkyl group of 1 to 8 carbon atoms or an aryl group of 6 to 14 carbon atoms, and in the n structural units, the combinations of m and R¹ to R¹⁰ may be all the same, partially different, or all mutually different.

In general formula (I), each of R¹, R², R³ and R⁴ independently represents an alkyl group or an aryl group, and preferably represents an alkyl group of 1 to 8 carbon atoms or an aryl group of 6 to 14 carbon atoms.

The alkyl group represented by R¹ to R⁴ preferably has 1 to 8 carbon atoms, and more preferably 1 to 4 carbon atoms, may have a straight chain or a branched chain, and may be either acyclic or cyclic.

The aryl group represented by R¹ to R⁴ preferably has 6 to 14 carbon atoms, and more preferably 6 to 8 carbon atoms. Within this range for the number of carbon atoms, the aryl group may have an alkyl group having a straight chain or a branched chain bonded to at least one carbon atom that forms the carbon ring.

Examples of R¹ to R⁴ include, independently, a methyl group, ethyl group, isobutyl group, cyclohexyl group, isooctyl group, phenyl group and alkyl-substituted phenyl group, and an unsubstituted or substituted phenyl group of 6 to 8 carbon atoms is preferred.

In general formula (I), each of R⁵ and R⁶ independently represents an alkyl group or an aryl group, and preferably represents an alkyl group of 1 to 8 carbon atoms or an aryl group of 6 to 14 carbon atoms.

The alkyl group represented by R⁵ or R⁶ preferably has 1 to 8 carbon atoms, and more preferably 1 to 4 carbon atoms, may have a straight chain or a branched chain, and may be either acyclic or cyclic.

The aryl group represented by R⁵ or R⁶ preferably has 6 to 14 carbon atoms, and more preferably 6 to 8 carbon atoms. Within this range for the number of carbon atoms, the aryl group may have an alkyl group having a straight chain or a branched chain bonded to at least one carbon atom that forms the carbon ring.

Examples of R⁵ and R⁶ include, independently, a methyl group, ethyl group, isobutyl group, cyclohexyl group, isooctyl group, phenyl group and alkyl-substituted phenyl group, and an alkyl group of 1 to 4 carbon atoms, or an unsubstituted or substituted phenyl group of 6 to 8 carbon atoms is preferred.

In general formula (I), each of R⁷, R⁸, R⁹ and R¹⁰ independently represents an alkyl group or an aryl group, and preferably represents an alkyl group of 1 to 8 carbon atoms or an aryl group of 6 to 14 carbon atoms.

The alkyl group represented by R⁷ to R¹⁰ preferably has 1 to 8 carbon atoms, and more preferably 1 to 4 carbon atoms, may have a straight chain or a branched chain, and may be either acyclic or cyclic.

The aryl group represented by R⁷ to R¹⁰ preferably has 6 to 14 carbon atoms, and more preferably 6 to 8 carbon atoms. Within this range for the number of carbon atoms, the aryl group may have an alkyl group having a straight chain or a branched chain bonded to at least one carbon atom that forms the carbon ring.

Examples of R⁷ to R¹⁰ include, independently, a methyl group, ethyl group, isobutyl group, cyclohexyl group, isooctyl group, phenyl group and alkyl-substituted phenyl group, and an alkyl group of 1 to 4 carbon atoms, or an unsubstituted or alkyl-substituted phenyl group of 6 to 8 carbon atoms is preferred.

Further, n is preferably a number that ensures a weight average molecular weight of 5,000 to 1,000,000.

In those cases where n is small and the weight average molecular weight is less than 5,000, the 5% thermal weight reduction temperature decreases, and obtaining heat resistance exceeding 400°C becomes difficult. Further, if the weight average molecular weight exceeds 1,000,000, then the compatibility deteriorates, and use of the compound as a raw material for a composition becomes difficult. From the viewpoints of heat resistance and compatibility, n is more preferably a number that yields a weight average molecular weight of 3,000 to 500,000, and even more preferably a number that yields a weight average molecular weight of 4,000 to 100,000.

Moreover, m is preferably an integer of 1 to 30.

The siloxane main chain that links the ladder silsesquioxanes moves aggressively as a soft segment at high temperatures. On the other hand, the ladder silsesquioxanes exhibit powerful cohesiveness, and cohesive forces operate both intermolecularly and intramolecularly. Accordingly, under high temperatures, it is thought that the polymer main chain having the ladder silsesquioxanes linked with a soft segment undergoes unique molecular chain movement, resulting in an improvement in the heat resistance of the polymer of one embodiment. However, if m exceeds 30, then because the effects that the silsesquioxanes exert on the siloxane main chain are reduced, this heat resistance effect decreases markedly. In order to achieve this unique molecular movement that improves the heat resistance, m is more preferably from 1 to 25, and even more preferably from 1 to 20.

In the n structural units of general formula (I), the combinations of R¹ to R¹⁰ and m within the various structural units may be all the same, partially different, or all mutually different.

### [Method for Producing Silicon Compound]

One example of a method for producing a silicon compound having a structural unit represented by general formula (I) is described below. The silicon compound having a structural unit represented by general formula (I) is not limited to compounds produced using the following production method.

The method for producing a silicon compound having a structural unit represented by general formula (I) preferably includes a step of producing the silicon compound using a compound represented by general formula (II) shown below. Moreover, a method that includes a step of producing the silicon compound using a compound represented by general formula (III) shown below is also preferred. A method that includes a step of reacting a compound represented by general formula (II) with a compound represented by general formula (III) is particularly preferred.

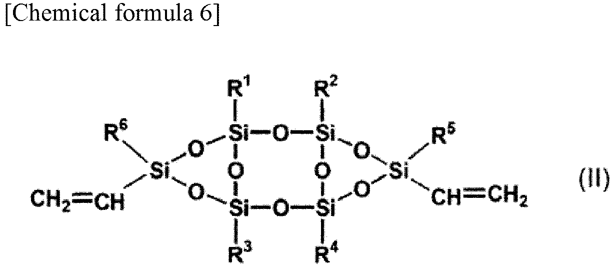

In general formula (II), each of R¹ to R⁴ independently represents an alkyl group of 1 to 8 carbon atoms or an aryl group of 6 to 14 carbon atoms, and each of R⁵ and R⁶ independently represents an alkyl group of 1 to 8 carbon atoms or an aryl group of 6 to 14 carbon atoms.

In general formula (II), each of R¹ to R⁴ independently represents an alkyl group or an aryl group, and preferably represents an alkyl group of 1 to 8 carbon atoms or an aryl group of 6 to 14 carbon atoms.

The alkyl group represented by R¹ to R⁴ preferably has 1 to 8 carbon atoms, and more preferably 1 to 4 carbon atoms, may have a straight chain or a branched chain, and may be either acyclic or cyclic.

The aryl group represented by R¹ to R⁴ preferably has 6 to 14 carbon atoms, and more preferably 6 to 8 carbon atoms. Within this range for the number of carbon atoms, the aryl group may have an alkyl group having a straight chain or a branched chain bonded to at least one carbon atom that forms the carbon ring.

Examples of R¹ to R⁴ include, independently, a methyl group, ethyl group, isobutyl group, cyclohexyl group, isooctyl group, phenyl group and alkyl-substituted phenyl group, and an unsubstituted or substituted phenyl group of 6 to 8 carbon atoms is preferred.

In general formula (II), each of R⁵ and R⁶ independently represents an alkyl group or an aryl group, and preferably represents an alkyl group of 1 to 8 carbon atoms or an aryl group of 6 to 14 carbon atoms.

The alkyl group represented by R⁵ or R⁶ preferably has 1 to 8 carbon atoms, and more preferably 1 to 4 carbon atoms, may have a straight chain or a branched chain, and may be either acyclic or cyclic.

The aryl group represented by R⁵ or R⁶ preferably has 6 to 14 carbon atoms, and more preferably 6 to 8 carbon atoms. Within this range for the number of carbon atoms, the aryl group may have an alkyl group having a straight chain or a branched chain bonded to at least one carbon atom that forms the carbon ring.

Examples of R⁵ and R⁶ include, independently, a methyl group, ethyl group, isobutyl group, cyclohexyl group, isooctyl group, phenyl group and alkyl-substituted phenyl group, and an alkyl group of 1 to 4 carbon atoms, or an unsubstituted or substituted phenyl group of 6 to 8 carbon atoms is preferred.

In the method for producing a silicon compound having a structural unit represented by general formula (I), the compound represented by general formula (II) may use at least one compound, or a combination of two or more compounds, selected from among a plurality of compounds having different combinations of R¹ to R⁶.

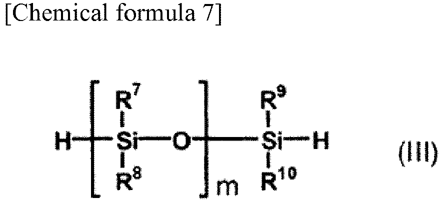

In general formula (III), m represents an integer of 1 to 30, and each of R⁷ to R¹⁰ independently represents an alkyl group of 1 to 8 carbon atoms or an aryl group of 6 to 14 carbon atoms.

In general formula (III), each of R⁷ to R¹⁰ independently represents an alkyl group or an aryl group, and preferably represents an alkyl group of 1 to 8 carbon atoms or an aryl group of 6 to 14 carbon atoms.

The alkyl group represented by R⁷ to R¹⁰ preferably has 1 to 8 carbon atoms, and more preferably 1 to 4 carbon atoms, may have a straight chain or a branched chain, and may be either acyclic or cyclic.

The aryl group represented by R⁷ to R¹⁰ preferably has 6 to 14 carbon atoms, and more preferably 6 to 8 carbon atoms. Within this range for the number of carbon atoms, the aryl group may have an alkyl group having a straight chain or a branched chain bonded to at least one carbon atom that forms the carbon ring.

Examples of R⁷ to R¹⁰ include, independently, a methyl group, ethyl group, isobutyl group, cyclohexyl group, isooctyl group, phenyl group and alkyl-substituted phenyl group, and an alkyl group of 1 to 4 carbon atoms, or an unsubstituted or alkyl-substituted phenyl group of 6 to 8 carbon atoms is preferred.

Further, m is preferably an integer of 1 to 30. In order to utilize the unique molecular movement that improves the heat resistance, m is more preferably from 1 to 25, and even more preferably from 1 to 20.

In the method for producing a silicon compound having a structural unit represented by general formula (I), the compound represented by general formula (III) may use at least one compound, or a combination of two or more compounds, selected from among a plurality of compounds having different combinations of R⁷ to R¹⁰ and m.

In those cases where the silicon compound having a structural unit represented by general formula (I) is produced using at least one of a compound represented by general formula (II) and a compound represented by general formula (III), the reaction is preferably performed in a solvent. There are no particular limitations on the solvent that is used, but specific examples include toluene, ethylbenzene, xylene, hexane, heptane, methyl ethyl ketone, methyl isobutyl ketone, cyclopentanone, tetrahydrofuran, propylene glycol monomethyl ether acetate, ethyl acetate and isobutyl acetate.

In those cases where the silicon compound having a structural unit represented by general formula (I) is produced using at least one of a compound represented by general formula (II) and a compound represented by general formula (III), a platinum-based catalyst is preferably used. Examples of the platinum-based catalyst include platinic chloride, catalysts of platinic chloride with an alcohol, an aldehyde or a ketone, platinum-olefin complexes, platinum-carbonyl vinylmethyl complex (Ossko catalyst), platinum-divinyltetramethylsiloxane complex (Karstedt complex), platinum-cyclovinylmethylsiloxane complex, platinum-octylaldehyde complex, platinum-phosphine complexes such as Pt[P(C₆H₅)₃]₄, PtCl[P(C₆H₅)₃]₃ and Pt[P(C₄H₉)₃]₄, platinum-phosphite complexes such as Pt[P(OC₆H₅)₃]₄ and Pt(OC₄H₉)₃]₄, and dicarbonyldichloroplatinum.

Compounds represented by general formula (II) have geometrical isomers. Specifically, there is a case in which the vinyl groups are both positioned facing inward, a case in which the vinyl groups are both positioned facing outward, and a case in which one of the vinyl groups is positioned facing inward and the other is positioned facing outward. For example, in the case where R¹ to R⁴ in general formula (II) are phenyl groups (C₆H₅), and R⁵ and R⁶ are methyl groups (CH₃), the three geometric isomers shown below are possible. In the method for producing a silicon compound having a structural unit represented by general formula (I), any one of these isomers may be used individually as the compound represented by general formula (II), or a combination of two or three isomers may be used.

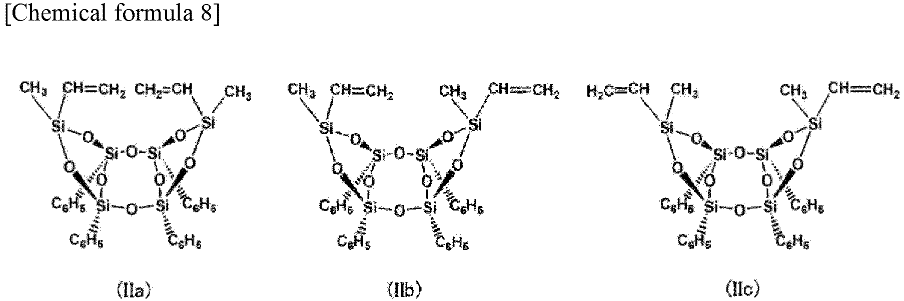

### [Method for Producing Compound Represented by General Formula (II)]

One example of a method for producing a compound represented by general formula (II) is described below. The compound represented by general formula (II) is not limited to compounds produced using the following production method.

In the production of the compound represented by general formula (II), for example, at least one of a compound represented by general formula (IV) shown below and a compound represented by general formula (V) shown below may be used.

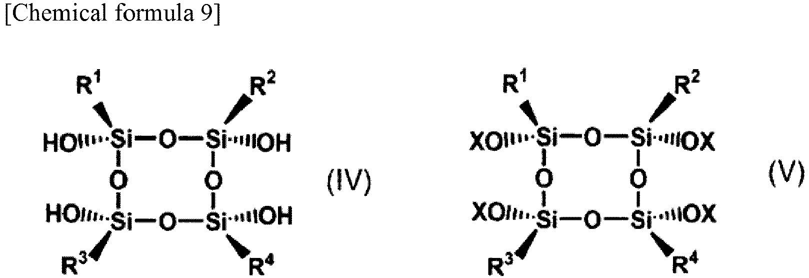

In general formula (IV), each of R¹ to R⁴ independently represents an alkyl group or an aryl group.

In general formula (V), each of R¹ to R⁴ independently represents an alkyl group or an aryl group, and X represents a monovalent metal element, wherein the four X groups may be all the same, a portion may be different, or all may be mutually different.

R¹ to R⁴ in general formula (IV) and general formula (V) are groups that are introduced as R¹ to R⁴ into the compound represented by general formula (II), and details regarding these groups are as described above in relation to general formula (II).

In general formula (V), X represents a monovalent metal element, and is preferably a metal selected from the group consisting of Li, Na and Ka, wherein the four X groups may be all the same, a portion may be different, or all may be mutually different.

In the compound represented by general formula (V), as described in Angewandt Chemie International Edition, (2016), 55, 9336 to 9339, the orientations of the OX groups are preferably all in the same direction relative to the siloxane ring. Similarly, the OH groups of the compound represented by general formula (IV) are preferably all oriented in the same direction. This is because the compound represented by general formula (II) is produced by reacting a silane compound represented by general formula (VI) with one of these compounds.

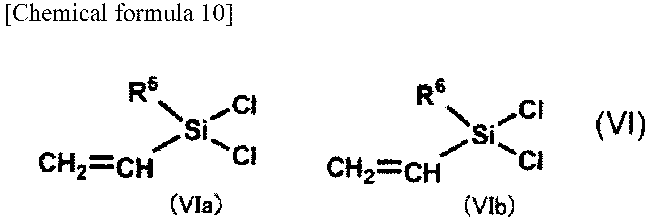

In general formula (VI), each of R⁵ and R⁶ independently represents an alkyl group or an aryl group.

R⁵ and R⁶ in general formula (VI) are groups that are introduced as R⁵ and R⁶ into the compound represented by general formula (II), and details regarding these groups are as described above in relation to general formula (II).

At least one of a compound represented by general formula (IV) and a compound represented by general formula (V), and a compound represented by general formula (VI) are preferably reacted together in a solvent in the presence of a base such as triethylamine. There are no particular limitations on the solvent used, and specific examples of solvents that may be used include toluene, ethylbenzene, xylene, hexane, heptane, methyl ethyl ketone, methyl isobutyl ketone, cyclopentanone, tetrahydrofuran, propylene glycol monomethyl ether acetate, ethyl acetate and isobutyl acetate.

The compound represented by general formula (IV) and the compound represented by general formula (V) can each be obtained by hydrolyzing and condensing an organic silane compound having three hydrolyzable groups.

For example, by reacting an organic silane compound having three hydrolyzable groups with a base represented by X(OH), a compound represented by general formula (V) can be obtained. Here, X represents a monovalent metal element. Further, by reacting a compound represented by general formula (V) with an acid such as hydrochloric acid, a compound represented by general formula (VI) can be obtained.

In one example, a compound represented by general formula (V) can be produced using a compound represented by general formula (VII) shown below.

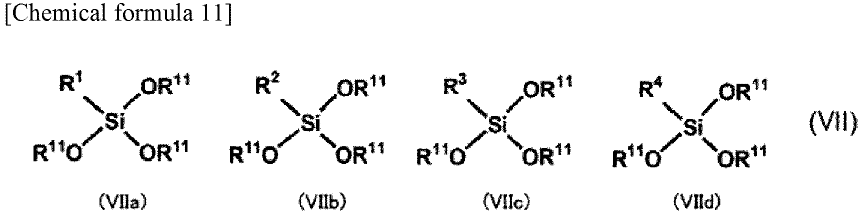

In general formula (VII), each of R¹ to R⁴ independently represents an alkyl group or an aryl group. R¹¹ represents an alkyl group.

R¹ to R⁴ in general formula (VII) are groups that are introduced into general formula (V) as R¹ to R⁴, and then introduced into the compound represented by general formula (II) as R¹ to R⁴, and details regarding these groups are as described above in relation to general formula (II).

In general formula (VII), R¹¹ is preferably an alkyl group of 1 to 8 carbon atoms, and more preferably an alkyl group of 1 to 4 carbon atoms. Specific examples include a methyl group, an ethyl group and an isobutyl group.

In those cases where the compound represented by general formula (V) is produced from a compound represented by general formula (VII), a base may be used to accelerate the reaction. There are no particular limitations on the base, and a basic compound represented by X(OH) may be used, with specific examples including lithium hydroxide, sodium hydroxide and potassium hydroxide.

The compound represented by general formula (V) is preferably obtained by reacting a compound represented by general formula (VII) in a solvent in the presence of water and a base. There are no particular limitations on the solvent used, and specific examples include toluene, ethylbenzene, xylene, hexane, heptane, 2-propanol, methyl ethyl ketone, methyl isobutyl ketone, cyclopentanone, tetrahydrofuran, propylene glycol monomethyl ether acetate, ethyl acetate and isobutyl acetate.

The compound represented by general formula (IV) is preferably obtained by reacting a compound represented by general formula (V) in a solvent in the presence of water and an acid. The compound represented by general formula (IV) is readily soluble in solvents, meaning there are no particular limitations on the solvent used, but specific examples include toluene, ethylbenzene, xylene, hexane, heptane, 2-propanol, methyl ethyl ketone, methyl isobutyl ketone, cyclopentanone, tetrahydrofuran, propylene glycol monomethyl ether acetate, ethyl acetate and isobutyl acetate.

### EXAMPLES

The present invention is described below in further detail using a series of examples, but the present invention is not limited to these examples.

The structure and purity of each obtained compound was determined by ¹H NMR, ¹³C NMR and ²⁹Si NMR. The measurement conditions for the ¹H NMR, ¹³C NMR and ²⁹Si NMR were as follows.

### (¹H NMR)

Apparatus: Avance 300 (manufactured by Bruker Corporation)
Observed nucleus: 1H
Resonance frequency: 300 MHz
Measurement temperature: 25°C

### (¹³C NMR)

Apparatus: Avance 300 (manufactured by Bruker Corporation)
Observed nucleus: 1H
Resonance frequency: 75 MHz
Measurement temperature: 25°C

### (²⁹Si NMR)

Apparatus: Avance 300 (manufactured by Bruker Corporation)
Resonance frequency: 60 MHz
Measurement temperature: 40°C

### (Synthesis of Compound Represented by General Formula (X))

A compound represented by general formula (X) shown below was synthesized using the following procedure. In general formula (X), C₆H₅ indicates a phenyl group (this also applies in all subsequent formulas). Components for which there is no particular description used reagents manufactured by Wako Pure Chemical Industries, Ltd., and components of the same label employed the same component through all of the examples (this also applies below).

A 500 mL round-bottom flask was charged with 6.00 g of ground sodium hydroxide, 2.71 g of purified water and 117.61 g of 2-propanol. With the mixture undergo vigorous stirring with a magnetic stirrer, 29.98 g of phenyltrimethoxysilane (KBM-103, manufactured by Shin-Etsu Chemical Co., Ltd.) was added gradually in a dropwise manner. When stirring was continued, the contents inside the flask initially became uniformly transparent, and cloudiness then developed. After 18 hours, the contents were filtered using a Hirsch funnel to separate the white solid. This solid was washed with hexane and then dried under reduced pressure, yielding 24.71 g of a white powdery solid. The structure of this compound represented by general formula (X) was determined by NMR.

¹H NMR (300 MHz, DMSO-d₆) δ = 7.76 (br, 8H), 7.20 (br, 12H). ¹³C NMR (75 NHz, DMSO-d₆) δ = 145.45, 135.35, 127.21. ²⁹Si NMR (60 NHz, DMSO-d₆) δ = -67.77.

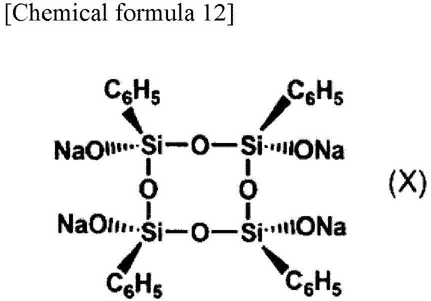

### (Synthesis of Compound Represented by General Formula (Y))

A compound represented by general formula (Y) shown below was synthesized using the following procedure.

A 1 L round-bottom flask was charged with 8.53 g of the compound represented by general formula (X) shown above and 85 mL of tetrahydrofuran, the flask was immersed in an ice bath, and the contents were stirred with a magnetic stirrer. Moreover, 48.81 g of a 1 N hydrochloric acid solution and 448.24 g of purified water were weighed into a polybottle, which was then cooled by immersion in an ice bath. This hydrochloric acid solution was then added to the round-bottom flask over a period of 5 minutes. Stirring was continued for a further 10 minutes, and with the pH being evaluated using pH indicator paper, a saturated solution of sodium bicarbonate was added gradually to neutralize the flask contents. Subsequently, 180 mL of ethyl acetate was added, and the contents of the flask were transferred to a separating funnel and shaken vigorously. The aqueous lower layer was removed, and an operation in which 100 mL of purified water was added to the upper layer, shaken, left to separate, and the lower layer then removed was repeated three times, and anhydrous sodium sulfate was then added to the upper layer. The sodium sulfate was removed using filter paper, and the solution was dried under reduced pressure using a rotary evaporator and an oil pump, yielding 5.48 g of white crystals. The structure of the compound represented by general formula (Y) was determined by NMR.

¹H NMR (300 MHz, THF-d₈) δ = 7.64 to 7.57 (m, 8H), 7.40 to 7.32 (m, 4H), 7.27 to 7.20 (m, 8H), 6.61 (s, 4H). ¹³C NMR (75 NHz, THF-ds) δ = 135.35, 135.22, 130.64, 128.36. ²⁹Si NMR (60 NHz, THF-d₈) δ = -71.86.

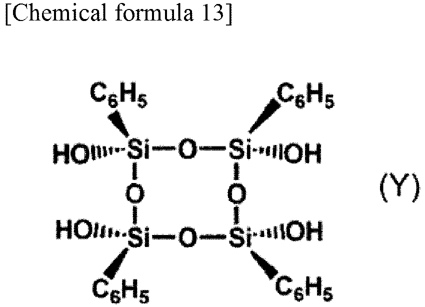

### (Synthesis of Compound Represented by General Formula (Z))

A compound represented by general formula (Z) shown below was synthesized using the following procedure.

A 200 mL three-neck flask fitted with a Dimroth condenser and a dropping funnel was charged with 8.01 g of the compound represented by the above general formula (Y), and the atmosphere inside the flask was flushed with nitrogen. When 80 mL of tetrahydrofuran was added and stirred, the compound dissolved and formed a transparent solution. The flask was then cooled to 0°C in an ice bath. A separate 200 mL flask was charged with 4.40 g of dichloromethylvinylsilane (manufactured by Tokyo Chemical Industry Co., Ltd.), 6.00 g of triethylamine (manufactured by Wako Pure Chemical Industries, Ltd.) and 80 mL of tetrahydrofuran to prepare a transparent solution, and this solution was transferred to the dropping funnel. The transparent solution was added gradually in a dropwise manner over a period of about one hour while cooling was continued using the ice bath. Following completion of the dropwise addition, stirring was continued for 30 minutes while cooling in the ice bath was maintained, and the ice bath was then removed. Subsequently, the flask was immersed in an oil bath, and heated under reflux for 10 hours. The oil bath was then removed, the flask was left to cool, 50 mL of a saturated aqueous solution of ammonium chloride and 80 mL of ethyl acetate were added, and the contents of the flask were then transferred to a separating funnel. After layer separation, the lower water layer was removed, and the upper layer was washed twice with 50 mL portions of purified water, and then dried over anhydrous sodium sulfate. The sodium sulfate was filtered off using filter paper, the solvent was then removed using a rotary evaporator, and the product was then dried under reduced pressure using an oil pump, yielding 12.11 g of a viscous liquid. Subsequently, 10 mL of hexane was added to the liquid and shaken vigorously, a centrifugal separation was performed under conditions including 2,500 rpm, and the supernatant was transferred to a flask. Ten mL of hexane was added to the residual viscous liquid and shaken vigorously, a centrifugal separation was again performed under conditions including 2,500 rpm, and the supernatant was combined with the solution in the above flask. The solvent was removed using a rotary evaporator, yielding 7.22 g of a viscous liquid. Next, 20 mL of methanol was added and shaken vigorously, a centrifugal separation was performed under conditions including 2,500 rpm, and the supernatant was removed. The residue was then washed twice with 4 mL portions of methanol, and then dried under reduced pressure using an oil pump, yielding 1.97 g of white crystals. The compound represented by general formula (Z) was determined by NMR to be a mixture of three geometric isomers. Structures of the presumed isomers are shown below.

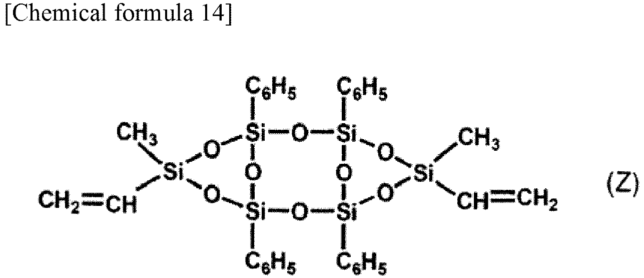

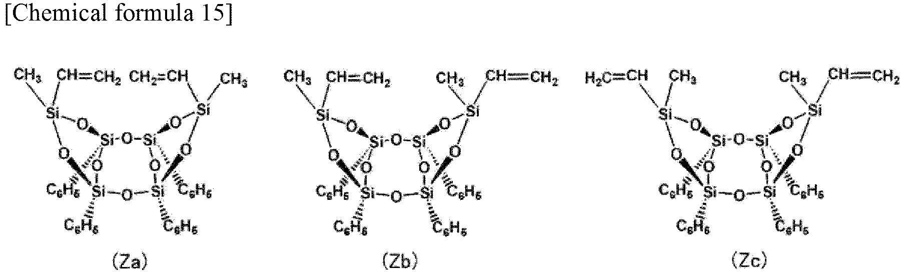

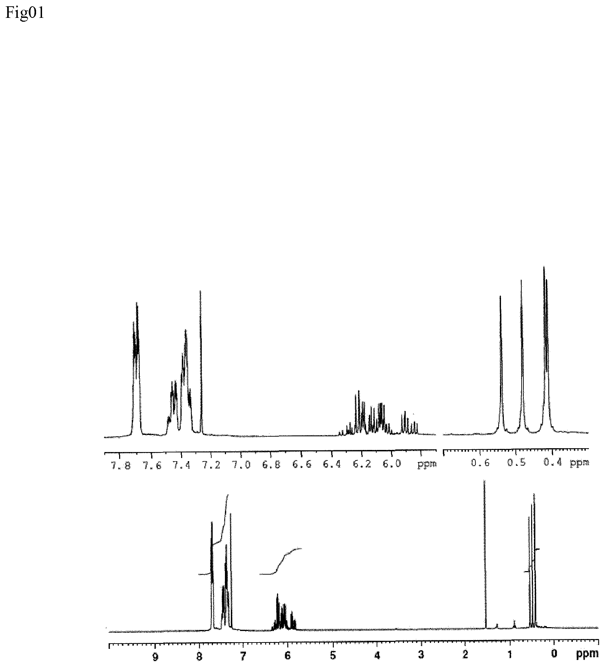

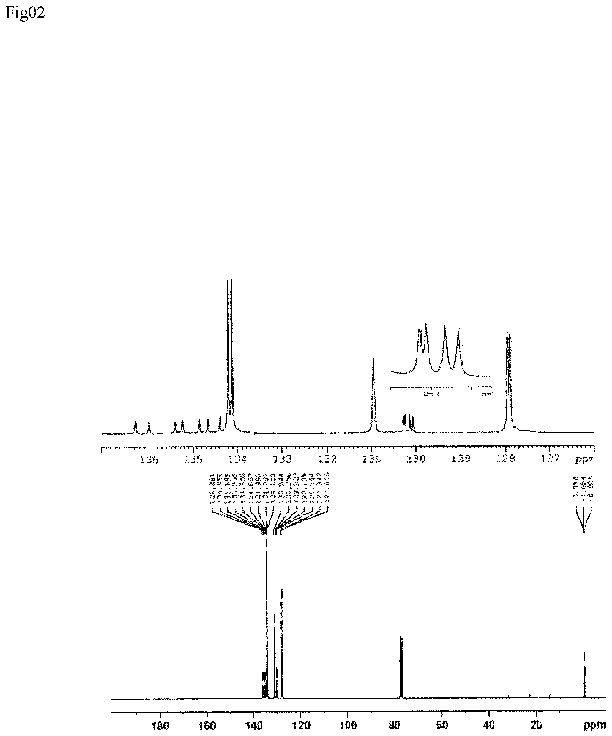

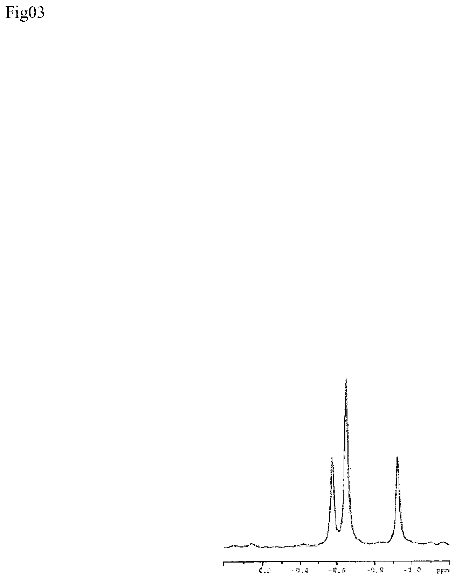

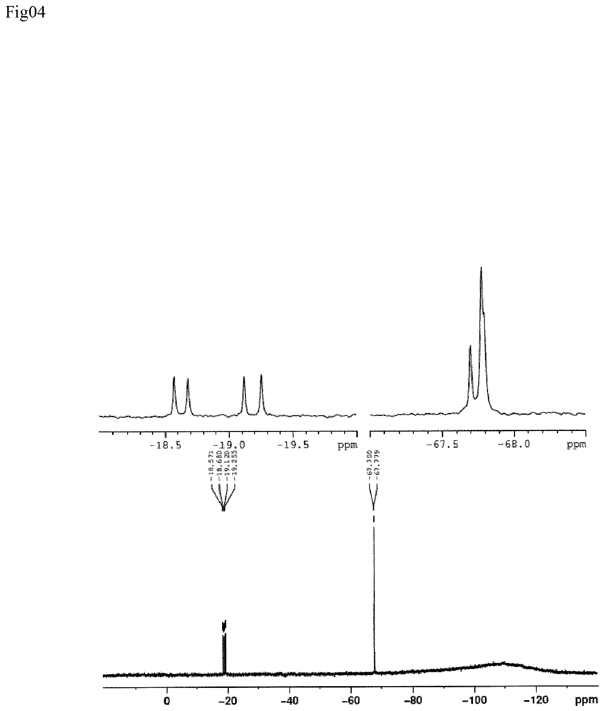

The ¹H NMR spectrum of the obtained compound represented by general formula (Z) is shown in FIG. 1, the ¹³C NMR spectrum is shown in FIG. 2, an expanded view of that ¹³C NMR spectrum is shown in FIG. 3, and the ²⁹Si NMR spectrum is shown in FIG. 4. In FIG. 1, FIG. 2 and FIG. 4, the lower portion represents the entire spectrum, and the upper portion represents a partial expanded view.

### (Synthesis of Silicon Compound having Structural Unit Represented by General formula (P), m=2)

A silicon compound having a structural unit represented by general formula (P) shown below (m=2) was synthesized using the following procedure.

First, 0.678 g of the compound represented by general formula (Z) obtained using the method described above was weighed into a 30 mL two-neck flask, a Dimroth condenser was fitted to the flask, and the atmosphere inside the flask was flushed with nitrogen. Using a syringe, 8 mL of toluene, 0.332 mL of 1,1,3,3,5,5-hexamethyltrisiloxane (manufactured by Tokyo Chemical Industry Co., Ltd.) and 0.030 mL of a platinum(0)-2,4,6,8-tetramethyl-2,4,6,8-tetravinylcyclotetrasiloxane complex solution were added to the flask. The resulting mixture was heated under reflux conditions for 12 hours, the solvent was then removed using an evaporator, and the residue was dried under reduced pressure using an oil pump, yielding 0.99 g of a light brown transparent liquid. A 0.75 g portion of the light brown transparent liquid was fractionated by GPC using an LC-Forte/R apparatus manufactured by YMC Co., Ltd., yielding 0.40 g of a colorless solid. The weight average molecular weight was 10,400.

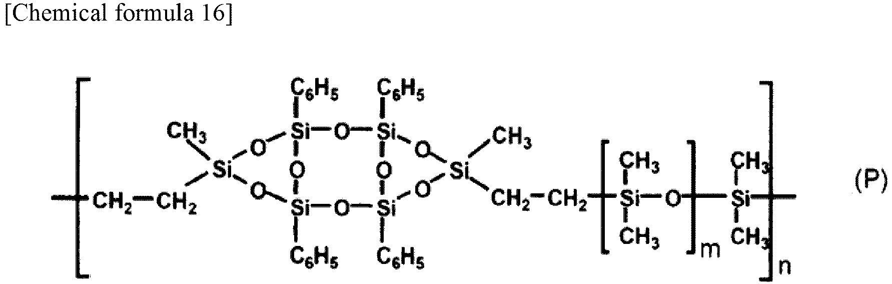

### <Comparative Example 1>

In Comparative Example 1, a heat-resistant silicone oil composed of a methylphenylpolysiloxane (KF-54, manufactured by Shin-Etsu Chemical Co., Ltd.) was used.

### (Comparison of 5% Thermal Weight Reduction Temperature)

The 5% thermal weight reduction temperatures upon heating were compared as a method for evaluating the heat resistance. Using a thermogravimetric-differential thermal analysis simultaneous measuring instrument DHG-60H manufactured by Shimadzu Corporation, measurements were performed under a nitrogen atmosphere under conditions including a rate of temperature increase of 10 L/min, and the 5% thermal weight reduction temperature was recorded. The results are shown in Table 1.

**[Table 1]**

| Item | 5% thermal weight reduction temperature [°C] |
|---|---|
| Example 1 m=2 | 465.9 |
| Comparative Example 1 | 346.2 |

The present invention is related to the subject matter disclosed in prior Japanese Application 2017-108038 filed on May 31, 2017, the entire contents of which are incorporated by reference herein.

It should be noted that, besides the embodiments already described above, various modifications and variations can be made to these embodiments without departing from the novel and advantageous features of the present invention. Accordingly, it is intended that all such modifications and variations are included within the scope of the appended claims.

## Claims

1. A silicon compound having a structural unit represented by general formula (I) shown below: 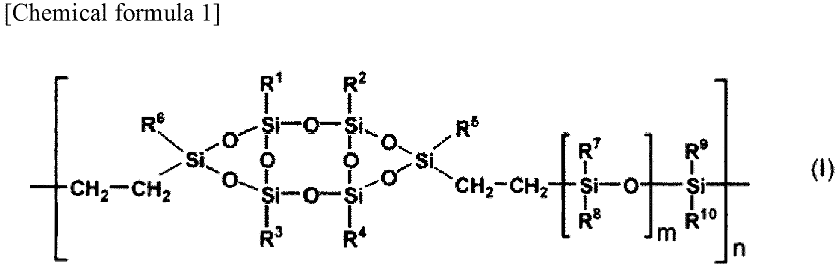 wherein in general formula (I),
m represents an integer of 1 to 30,
n represents a number that ensures a weight average molecular weight of 5,000 to 1,000,000,
each of R¹ to R⁴ independently represents an alkyl group of 1 to 8 carbon atoms or an aryl group of 6 to 14 carbon atoms,
each of R⁵ and R⁶ independently represents an alkyl group of 1 to 8 carbon atoms or an aryl group of 6 to 14 carbon atoms,
each of R⁷ to R¹⁰ independently represents an alkyl group of 1 to 8 carbon atoms or an aryl group of 6 to 14 carbon atoms, and
in the n structural units, combinations of m and R¹ to R¹⁰ may be all the same, partially different, or all mutually different.

2. A method for producing a silicon compound having a structural unit represented by general formula (I) shown below, the method comprising a step of producing the silicon compound using a compound represented by general formula (II) shown below: 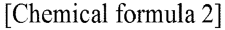 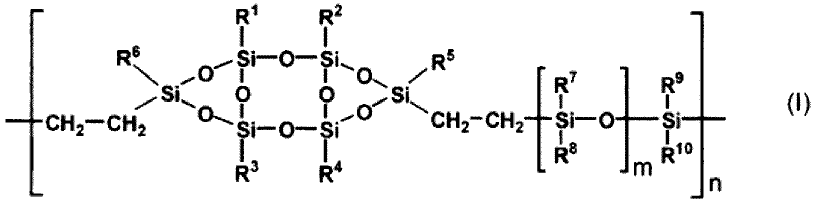 wherein in general formula (I),
m represents an integer of 1 to 30,
n represents a number that ensures a weight average molecular weight of 5,000 to 1,000,000,
each of R¹ to R⁴ independently represents an alkyl group of 1 to 8 carbon atoms or an aryl group of 6 to 14 carbon atoms,
each of R⁵ and R⁶ independently represents an alkyl group of 1 to 8 carbon atoms or an aryl group of 6 to 14 carbon atoms,
each of R⁷ to R¹⁰ independently represents an alkyl group of 1 to 8 carbon atoms or an aryl group of 6 to 14 carbon atoms,
in the n structural units, combinations of m and R¹ to R¹⁰ may be all the same, partially different, or all mutually different, and 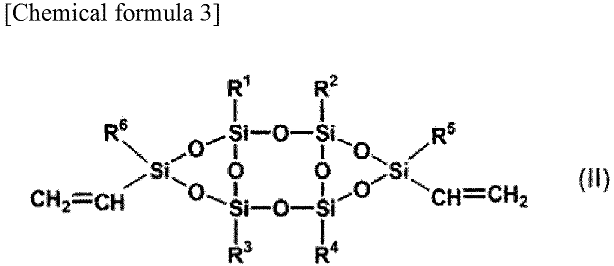 in general formula (II),
each of R¹ to R⁴ independently represents an alkyl group of 1 to 8 carbon atoms or an aryl group of 6 to 14 carbon atoms, and
each of R⁵ and R⁶ independently represents an alkyl group of 1 to 8 carbon atoms or an aryl group of 6 to 14 carbon atoms.

3. The method for producing a silicon compound according to Claim 2, the method comprising a step of producing the silicon compound using a compound represented by general formula (III) shown below: 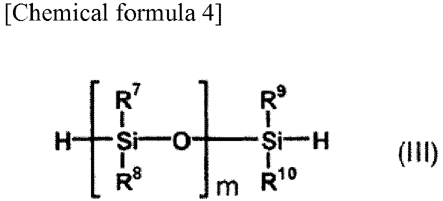 wherein in general formula (III),
m represents an integer of 1 to 30, and
each of R⁷ to R¹⁰ independently represents an alkyl group of 1 to 8 carbon atoms or an aryl group of 6 to 14 carbon atoms.
